## Europäisches Patentamt

## European Patent Office

## Office européen des brevets

(11) Veröffentlichungsnummer: **0 063 263**
**B1**

(12) **EUROPÄISCHE PATENTSCHRIFT**

(19)

(45) Veröffentlichungstag der Patentschrift:
**19.11.87**

(21) Anmeldenummer: **82102615.0**

(22) Anmeldetag: **29.03.82**

(51) Int. Cl.⁴: **C 08 L 67/02**

(54) **Polyalkylenterephthalat/Pfropfpolymerisat-Mischungen.**

(30) Priorität: **11.04.81 DE 3114772**

(43) Veröffentlichungstag der Anmeldung:
**27.10.82 Patentblatt 82/43**

(45) Bekanntmachung des Hinweises auf die Patenterteilung:
**19.11.87 Patentblatt 87/47**

(84) Benannte Vertragsstaaten:
**DE FR GB IT NL**

(56) Entgegenhaltungen:
**DE - A - 2 523 010**
**DE - A - 3 004 942**
**FR - A - 2 320 968**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Bier, Peter, Dr., Bodelschwinghstrasse 18, D-4150 Krefeld 1 (DE)**
Erfinder: **Lindner, Christian, Dr., Riehlerstrasse 200, D-5000 Köin 60 (DE)**
Erfinder: **Binsack, Rudolf, Dr., Dipl.-Chem., Bethelstrasse 4a, D-4150 Krefeld (DE)**
Erfinder: **Rempel, Dieter, Dr., Dipl.-Chem., Max-Beckmann-Strasse 15, D-5090 Leverkusen (DE)**

## Beschreibung

Die Erfindung betrifft Mischungen aus Polyalkylenterephthalaten und Pfropfpolymerisation bestimmter Zusammensetzung und eng definierter Teilchengrösse.

Polyalkylenterephthalate haben auf dem Gebiet der thermoplastischen Formmassen wegen ihrer wertvollen technologischen Eigenschaften, wie z.B. Steifigkeit, Härte, Abriebfestigkeit, dynamische und thermische Belastbarkeit, schnelle Verarbeitbarkeit, grosse Bedeutung erlangt.

Es existieren zahlreiche Vorschläge, thermoplastische Polyester durch Zumischen oder Einkondensieren anderer Polymerer, insbesondere solcher auf Basis modifizierter Elastomerer und Polyolefine, zu modifizieren (DE-OS 1 694 173, 1 928 369, DE-AS 1 961 226, 1 962 855, DE-OS 2 248 242, 2 310 034, 2 357 406, 2 364 318, US 3 236 914, 3 723 574). Den vorgeschlagenen Massnahmen haftet jedoch der Nachteil an, dass diese Modifizierung mit einer wesentlichen Verschlechterung wesentlicher Eigenschaften einhergeht.

Die DE-OS 2 523 010 betrifft feuerfeste, thermoplastische Polyesterharz-Zusammensetzungen aus einem thermoplastischen Polyester, einem Polybutadien-Propfpolymerisat, einem feuerhemmenden Mittel und ggf. weiteren Zusätzen. Als Beispiele für Polyester werden u.a. Polyalkylenterephthalate genannt. Das Pfropfpolymerisat soll vorzugsweise ein solches mit einem Pfropfverhältnis (Pfropfgrad) von etwa 15 bis 200% sein. Der durchschnittliche Teilchendurchmesser soll vorzugsweise weniger als etwa 1 μ, insbesondere etwa 1 μ bis 0.01 μ betragen. Dass man Polyester/Pfropfpolymerisat-Produkte mit verbesserter mehraxialer Schlagzähigkeit erhält, wenn man Pfropfverhältnis, mittleren Teilchendurchmesser und Gelgehalt des Pfropfpolymerisats innerhalb enger Grenzen hält, wird durch die DE-OS 2 523 010 nicht nahegelegt.

Überraschenderweise wurde nun gefunden, dass sich die geschilderten Nachteile dadurch beheben lassen, dass man ganz bestimmte Pfropfpolymerisate, nämlich solche mit einem relativ hohen Gehalt an Pfropfgrundlage und einer eng definierten Teilchengrösse, auswählt.

Gegenstand der Erfindung sind Mischungen aus

A. 65–99, vorzugsweise 70–98, insbesondere 75–97, Gew.-% Polyalkylenterephthalat, das wiederum aus

    a) 0–100 Gew.-% Polyethylenterephthalat (PET) und

    b) 100–0 Gew.-% Polybutylenterephthalat (PBT) besteht, und

B. 1–35, vorzugsweise 2–30, insbesondere 3–25, Gew.-%, Pfropfpolymerisat mit einem Pfropfgrad von 0.15 bis 0.55 und einem mittleren Teilchendurchmesser von 0.01 bis 10 μm,

wobei sich die Prozentangaben zu A und B auf die Summe A + B und die Prozentangaben zu a und b auf A beziehen und das Pfropfpolymerisat B durch Pfropfreaktion von

I. 10–40, vorzugsweise 15–35, insbesondere 20–25 Gew.-%, bezogen auf B, eines oder mehrerer (Meth)-Acrylsäureester, die bis zur Hälfte durch Acrylnitril ersetzt sein können, auf

II. 60–90, vorzugsweise 65–85, insbesondere 75–80, Gew.-%, bezogen auf B, eines Butadien-Polymerisats mit mindestens 70 Gew.-%, bezogen auf II, Butadienresten als Pfropfgrundlage erhältlich ist,

dadurch gekennzeichnet, dass der Gelanteil der Pfropfgrundlage II 70%, vorzugsweise 80% (in Toluol gemessen), und der mittlere Teilchendurchmesser $d_{50}$ des Pfropfpolymerisats B 0,2–0,6, vorzugsweise 0,3–0,5, μm betragen.

Die Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die Polyalkylenterephthalate A können neben Terephthalsäureresten bis zu 20 Mol-% Reste anderer aromatischer Dicarbonsäuren mit 6–14 C-Atomen, aliphatischer Dicarbonsäuren mit 4–8 C-Atomen und/oder cycloaliphatischer Dicarbonsäuren mit 8 bis 12 C-Atomen enthalten, wie z.B. Reste von Phthalsäure, Isophthalsäure, Naphthalin-2,6-dicarbonsäure, Phenyl-4,4'-dicarbonsäure, Bernstein-, Adipin-, Sebacinsäure, Cyclohexandiessigsäure.

Die Polyalkylenterephthalate A können neben Ethylen- bzw. Butandiol-1,4-glykolresten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate A können durch Einbau relativ kleiner Mengen 3- oder 4-wertiger Alkohole oder 3- oder 4-basischer Carbonsäuren, wie sie z.B. in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyethylenterephthalate A, die allein aus Terephthalsäure und deren reaktionsfähigen Derivaten (z.B. deren Dialkylestern oder Anhydriden) und Ethylenglykol hergestellt worden sind.

Die als Komponente A verwendeten Polyethylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, und die als Komponente A verwendeten Polybutylenterephthalate besitzen im allgemeinen eine Instrinsic-Viskosität von 0,7 bis 1,5 dl/g, vorzugsweise 0,8 bis 1,3 dl/g, insbesondere 0,8 bis 1,05 dl/g, jeweils gemessen in Phenol/o-Dichlorbenzol (1:1 Gewichtsteile).

Bevorzugte (Meth)Acrylsäureester BI sind Ester von Alkoholen mit 1 bis 4 C-Atomen und Acryl- bzw. Methacrylsäure. Bevorzugter (Meth-)Acrylsäureester ist Methylmethacrylat.

Die Pfropfgrundlage II kann neben Butadienresten bis zu 30 Gew.-%, bezogen auf II, Reste anderer α,β-ethylenisch ungesättigter Monomerer, wie z.B. Styrol, Acrylnitril, Ester der Acryl- oder Methacrylsäure mit 1–4 C-Atomen in der Alkoholkomponente (wie Methylacrylat, Ethylacrylat, Methylmethacrylat, Ethylmethacrylat), enthalten. Die bevorzugte Pfropfgrundlage II besteht aus reinem Polybutadien.

Da bei der Pfropfreaktion die Pfropfmonomeren I bekanntlich nicht vollständig auf die Pfropfgrundlage II aufpropfen, werden erfindungsgemäss unter Pfropfpolymerisaten auch solche Produkte verstanden, die neben den eigentlichen Pfropfpolymeren auch Polymerisate des eingesetzten Pfropfmonomeren I enthalten. Der Pfropfgrad G bezeichnet das Gewichtsverhältnis von aufgepfropftem Pfropfmonomeren I: Pfropfgrundlage und ist dimensionslos.

Der mittlere Teilchendurchmesser $d_{50}$ ist der Durchmesser, oberhalb und unterhalb dessen jeweils 50 Gew.-% der Teilchen liegen.

Der mittlere Teilchendurchmesser kann mittels Ultrazentrifugen-Messungen (W. Scholtan, H. Lange, Kolloid. Z. und Z. Polymere 250 (1972), 782–786) oder mittels Elektronenmikroskopie und anschliessende Teilchenauszählung (G. Kämpf, H. Schuster, Angew. Makromolekulare Chemie 14 (1970), 111–129) bestimmt werden.

Die Pfropfpolymerisate B können nach an sich bekannten Methoden, z.B. durch Emulsionspolymerisation oder Latex-Suspensionsverfahren, mit Hilfe von Radikal-bildenden Polymerisationsinitiatoren in einem Polybutadien- bzw. Butadien-Copolymerisat-Latex hergestellt werden; vgl. z.B. R.J. Ceresa, Block and Graft Copolymers, Butterworth, London, 1962.

Für die Zwecke der Erfindung werden Pfropfpolymerisate B bevorzugt, die kautschukelastische Eigenschaften besitzen und deren Glasübergangstemperatur unterhalb von +10°C, insbesondere zwischen −150 und −20°C, vorzugsweise zwischen −80 und −30°C, liegt. Die Ermittlung der Glasübergangstemperatur kann dabei nach B. Vollmer, Grundriss der Makromolekularen Chemie, Springer-Verlag, Heidelberg 1962, Seiten 406–410, erfolgen.

Die Herstellung der erfindungsgemässen Mischung kann in den üblichen Mischaggregaten wie Walzen, Kneter, Ein- und Mehrwellenextruder erfolgen. Besonders geeignet sind Doppelwellenextruder und Kneter.

Die Mischungen können auf den genannten Mischaggregaten hergestellt werden, indem die beiden Komponenten A und B gemeinsam aufgeschmolzen und homogenisiert werden oder indem das Pfropfpolymerisat B in die Schmelze des Polyalkylenterephthalats A eingearbeitet wird.

Die Temperatur bei der Herstellung der Mischungen sollte mindestens 10°C oberhalb der Schmelzpunkte des Polyalkylenterephthalats A und unterhalb 300°C, vorzugsweise zwischen 245 und 280°C liegen, wobei die niedrigen Temperaturen für PBT-reiche und die höheren Temperaturen für PET-reiche Mischungen am geeignetsten sind.

Die erfindungsgemässen Mischungen können übliche Additive, wie Gleit- und Entformungsmittel, Nukleiermittel, Stabilisatoren, Füll- und Verstärkungsstoffe, Flammschutzmittel sowie Farbstoffe, enthalten. Die Zusatzstoffe werden vorzugsweise bei der Compoundierung in reiner Form oder als Konzentrate zugesetzt.

Die erfindungsgemässen Mischungen können bis zu 60, vorzugsweise 5–50, insbesondere 10–40 Gew.-%, bezogen auf die Summe aus erfindungsgemässen Mischungen und Füll- bzw. Verstärkungsstoff, eines Füllstoffes und/oder Verstärkungsstoffes enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Mischungen enthalten Flammschutzmittel in einer Konzentration von im allgemeinen weniger als 30 Gew.-%, bezogen auf die Formmasse.

Es kommen alle bekannten Flammschutzmittel in Frage, wie z.B. Polyhalogendiphenyl, Polyhalogendiphenylether, Polyhalogenphthalsäure und ihre Derivate und Polyhalogenpolycarbonate, wobei die entsprechenden Bromverbindungen besonders wirksam sind. Ausserdem enthalten sie in der Regel einen Synergisten, wie z.B. Antimontrioxid.

Die erfindungsgemässen Mischungen zeichnen sich bei niedrigen Gehalten an Pfropfpolymerisat B durch eine erhebliche Verbesserung der Zähigkeit, insbesondere bei niedrigen Temperaturen bis zu −40°C, aus. Überraschend für die Mischungen ist auch die hohe Fliessnahtfestigkeit. Darüber hinaus zeichnen sich die Mischungen durch eine hohe Wärmeformbeständigkeit aus.

Weiterhin hat sich herausgestellt, dass der Gehalt an Pfropfpolymerisat B das Spritzgussverhalten von Polyethylenterephthalaten ausserordentlich günstig beeinflusst.

Während sich PBT bei relativ niedrigen Formtemperaturen (etwa 80°C) mit kurzer Zykluszeit zu kristallinen Formkörpern verspritzen lässt, erhält man kristalline PET-Formkörper erst bei Formtemperaturen von ca. 140°C, so dass keine wasserbeheizten Formen mehr eingesetzt werden können. In amorphem Zustand – also transparent – fällt PET an, wenn bei Formtemperaturen von 50–70°C verarbeitet wird.

Zwar kann man durch Nachtempern erreichen, dass amorphes PET in den kristallinen Zustand übergeht, doch versteht sich von selbst, dass dies keine geeignete Methode für eine grosstechnische Fertigung ist. Es hat daher nicht an Bemühungen gemangelt, PET so zu modifizieren, dass es in wasserbeheizten Formen zu kristallinen Spritzgussartikeln verarbeitet werden kann, doch hat sich bis heute keine Methode technisch durchsetzen können.

Hohe Kristallinität garantiert Härte und Formbeständigkeit auch bei höheren Temperaturen. Diese hohe Kristallinität sollte so rasch wie möglich erreicht werden, um optimale Eigenschaften sicherzustellen. Ausserdem bestimmt die Verweilzeit in der Form die Länge des Spritzgusszyklus und damit die Wirtschaftlichkeit des Spritzgussverfahrens. Selbst bei hohen Formtemperaturen erscheinen diese Zyklen noch als zu lang und haben daher eine weitere Ausweitung des Einsatzes von PET-Formmassen verhindert.

Überraschenderweise wurde gefunden, dass sich die erfindungsgemässen PET/Pfropfpolymerisat-Mischungen bei Formtemperaturen von 80 bis 120 °C zu Spritzgussartikeln hoher Kristallinität verarbeiten lassen.

Ein geeignetes Mass für die Kristallinität der erhaltenen Formkörper ist die mittels Differentialthermoanalyse (DTA) bestimmte Nachkristallisationsenthalpie $\Delta H_{c\text{-post}}$:

je kleiner $\Delta H_{c\text{-post}}$, desto grösser die Kristallinität. Formkörper mit der grössten erreichbaren Kristallinität weisen also einen $\Delta H_{c\text{-post}}$-Wert von Null auf.

Die erfindungsgemäss hergestellten PET-Pfropfpolymerisat-Formkörper besitzen $\Delta H_{c\text{-post}}$-Werte von weniger als 15, vorzugsweise weniger als 7,5, insbesondere weniger als 3,5 J/g, während bei einer Formtemperatur von 100 °C aus reinem PET hergestellte Formkörper einen $\Delta H_{c\text{-post}}$-Wert von 23,1 Joule/g zeigen (Tabelle 1).

Entsprechend dem Eigenschaftsprofil können die erfindungsgemässen Mischungen überall im Spritzguss- und Extrusionssektor dort eingesetzt werden, wo hohe Wärmeformbeständigkeit und hohe Zähigkeit, verbunden mit hoher Lösungsmittelbeständigkeit, gefordert werden, z.B. bei temperaturbelasteten Haushaltsgeräten, Karosserieteilen, Stossfängern, Büromaschinen-Bauteilen, Lampenhaltern.

Weiterer Gegenstand der Erfindung ist die Verwendung der erfindungsgemässen Mischungen zur Herstellung von Formkörpern.

Besonders bevorzugt ist die Verwendung der erfindungsgemässen Mischungen auf Basis von PET zur Herstellung von Formkörpern bei Formtemperaturen von 80 bis 120 °C.

Die in den nachfolgenden Beispielen genannten Teile sind Gewichtsteile; Prozentangaben beziehen sich auf das Gewicht.

Beispiele

Es werden folgende Materialien eingesetzt:

A1. PET mit einer Intrinsic-Viskosität von 0.62 dl/g, gemessen als 0,5%ige Lösung in Phenol-/o-Dichlorbenzol (Gewichtsverhältnis 1:1) bei 25 °C,

A2. PET mit einer Intrinsic-Viskosität von 0.80 dl/g, gemessen wie oben,

A3. PBT mit einer Intrinsic-Viskosität von 0.95 dl/g, gemessen wie oben,

B1. Pfropfpolymerisat mit 80% Pfropfgrundlage aus vernetztem Polybutadien und 20% Pfropfauflage aus Polymethylmethacrylat,

B2. Pfropfpolymerisat mit 80% Pfropfgrundlage aus vernetztem Polybutadien und 20% Pfropfauflage aus 6 Teilen Methylmethacrylat und 4 Teilen Acrylnitril.

Beide eingesetzten Pfropfpolymerisate besassen einen Gelanteil der Pfropfgrundlage > 70%, einen Pfropfgrad G von 0.15–0.55 und eine mittlere Teilchengrösse $d_{50}$ von 0.4 µm.

An Oberflächenproben von PET-Norm-Kleinstäben wurde mittels Differentialthermoanalyse (DTA) die Nachkristallisationsenthalpie $\Delta H_{c\text{-post}}$, die Schmelzenthalpie $\Delta H_m$, die Schmelztemperatur $T_m$, die Kristallisationsenthalpie $\Delta H_c$ und die Kristallisationstemperatur $T_c$ bestimmt. Die Aufheiz- und Abkühlgeschwindigkeit betrug 20 °C/Minute (Tabelle 1).

Die Massetemperatur betrug 250 °C, die Formtemperatur 100 °C.

Tabelle 1

| Beispiel | Polyester A / Pfropfpolymerisat B | | $\Delta H_c$-post (J/g) | $T_c$-post (°C) | $\Delta H_m$ (J/g) | $T_m$ (°C) | $\Delta H_c$ (J/g) | $T_c$ (°C) |
|---|---|---|---|---|---|---|---|---|
| | Art | Menge (%) | | | | | | |
| 1 | A1/B1 | 95/5 | 9,8 | 118 | 44,8 | 253,5 | 41,2 | 190 |
| 2 | A1/B1 | 90/10 | 7,5 | 115 | 44,6 | 253 | 40,8 | 190 |
| 3 | A1/B1 | 85/15 | 0 | – | 40,2 | 253,5 | 39,1 | 185 |
| 4 | A1/B1 | 80/20 | 0 | – | 40,0 | 251,5 | 36,7 | 184 |
| 5 | A1/B2 | 80/20 | h | | | | | |
| Vergleich | A1/– | 100/– | 23,1 | 140 | 43,6 | 254 | 18,5 | 151 |

Von PBT-Mischungen wurden Normkleinstäbe (nach DIN 53 453) und Platten von 3 × 60 × 60 mm gespritzt.

Geprüft wurden die Kerbschlagzähigkeit $a_k$ (nach DIN 53 453), Kugeldruckhärte $H_c$ (nach DIN 53 456) sowie die mehraxiale Schlagzähigkeit im EKWA-Test (DIN 53 443, Blatt 2, Durchschlagung einer Platte von 3 × 60 × 60 mm mit einem Gewicht von 35 kg mit einem Durchstossdorn mit kugelförmiger Spitze, Durchmesser 20 mm, bei einer Fallhöhe von 1 m); vgl. Tabelle 2.

Die Massetemperatur betrug 260 °C, die Formtemperatur 80 °C.

Tabelle 2

| Beispiel | Polyester A / Pfropfpolymerisat B | | $a_k$ (kJ/m²) | $H_c$ (MPa) | EKWA-Test |
| | Art | Menge (%) | | | Zahl der Zähbrüche |
|---|---|---|---|---|---|
| 6 | A3/B1 | 95/5 | 4.5 | 111 | 100 |
| 7 | A3/B1 | 90/10 | 5.8 | 98 | 100 |
| 8 | A3/B1 | 80/20 | 10.2 | 78 | 100 |

EKW = Elektronische Kraft/Weg-Aufnahme

Analog den Beispielen 6–8 wurden die mechanischen Eigenschaften von PET-Mischungen gemessen. Die Massentemperatur betrug 275 °C, die Formtemperatur 110 °C.

Tabelle 3

| Beispiel | Polyester A / Pfropfpolymerisat B | | $a_k$ (kJ/m²) | $H_c$ (MPa) | EKWA-Test |
| | Art | Menge (%) | | | Zahl der Zähbrüche (%) |
|---|---|---|---|---|---|
| 9 | A2/B1 | 95/5 | 4.3 | 146 | 100 |
| 10 | A2/B1 | 90/10 | 5.0 | 142 | 100 |
| 11 | A2/B1 | 80/20 | 8.5 | 120 | 100 |
| Vergleich | A2/– | 100/– | 2.6 | 152 | 0 |

**Patentansprüche**

1. Mischungen aus
A. 65–99 Gew.-% Polyalkylenterephthalat, das wiederum aus
  a) 0–100 Gew.-% Polyethylenterephthalat (PET) und
  b) 100–0 Gew.-% Polybutylenterephthalat (PBT) besteht und
B. 1–35 Gew.-% Pfropfpolymerisat mit einem Pfropfgrad von 0.15 bis 0.55 und einem mittleren Teilchendurchmesser von 0.01 bis 1 µm, wobei sich die Prozentangaben zu A und B auf die Summe A + B und die Prozentangaben zu a und b auf A beziehen und das Pfropfpolymerisat B durch Pfropfreaktion von
I. 10–40 Gew.-%, bezogen auf B, einer oder mehrerer (Meth)-Acrylsäureester, die bis zur Hälfte durch Acryl-nitril ersetzt sein können, auf
II. 60–90 Gew.-% bezogen auf B, eines Butadien-Polymerisats mit mindestens 70 Gew.-%, bezogen auf II, Butadienresten als Pfropfgrundlage erhältlich ist,
dadurch gekennzeichnet, dass der Gelanteil der Pfropfgrundlage II > 70% (in Toluol gemessen) und der mittlere Teilchendurchmesser d₅₀ des Pfropfpolymerisats B 0,2–0,6 µm betragen.

2. Mischungen nach Anspruch 1, dadurch gekennzeichnet, dass sie aus 70–98 Gew.-% A und 2–30 Gew.-% B bestehen.

3. Mischungen nach Ansprüchen 1 und 2, dadurch gekennzeichnet, dass sie aus 75–97 Gew.-% A und 3–25 Gew.-% B bestehen.

4. Mischungen nach Ansprüchen 1–3, dadurch gekennzeichnet, dass das Pfropfpolymerisat B durch Pfropfreaktion von 15–35 Gew.-% I auf 65–85 Gew.-% II erhältlich ist.

5. Mischungen nach Ansprüchen 1–4, dadurch gekennzeichnet, dass das Pfropfpolymerisat B durch Pfropfreaktion von 20–25 Gew.-% I auf 75–80 Gew.-% II erhältlich ist.

6. Mischungen nach Ansprüchen 1–5, dadurch gekennzeichnet, dass der Gelanteil der Pfropfgrundlage II > 80% (in Toluol gemessen) beträgt.

7. Mischungen nach Ansprüchen 1–6, dadurch gekennzeichnet, dass der mittlere Teilchendurchmesser d₅₀ des Pfropfpolymerisats B 0,3–0,5 µm beträgt.

8. Mischungen nach Ansprüchen 1–7, dadurch gekennzeichnet, dass als Pfropfmonomer BI Methylmethacrylat oder eine Mischung aus Methylmethacrylat und Acrylnitril verwendet wird.

9. Mischungen nach Ansprüchen 1–8, dadurch gekennzeichnet, dass sie bis zu 60 Gew.-% Verstärkungsmittel enthalten.

10. Verwendung der Mischungen nach Ansprüchen 1–9 zur Herstellung von Formkörpern.

**Claims**

1. Mixtures of
A. 65–99% by weight of polyalkylene terephthalate, which in turn consists of
  a) 0–100% by weight of polyethylene terephthalate (PET) and

b) 100–0% by weight of polybutylene terephthalate (PBT) and

B. 1–35% by weight of a graft polymer with a degree of grafting of 0.15 to 0.55 and an average particle diameter of 0.01 to 1 µm, the percentages under A and B being based on the sum of A + B and the percentages under a and b being based on A, and the graft polymer B being obtainable by a grafting reaction of

I. 10–40% by weight, based on B, of one or more (meth)-acrylic acid esters, up to half of which can be replaced by acrylonitrile, on to

II. 60–90% by weight, based on B, of a butadiene polymer containing at least 70% by weight, based on II, of butadiene radicals, as the graft base, characterised in that the gel content of the graft base II is > 70% (measured in toluene) and the average particle diameter $d_{50}$ of the graft polymer B is 0.2–0.6 µm.

2. Mixtures according to Claim 1, characterised in that they consist of 70–98% by weight of A and 2–30% by weight of B.

3. Mixtures according to Claims 1 and 2, characterised in that they consist of 75–97% by weight of A and 3–25% by weight of B.

4. Mixtures according to Claims 1–3, characterised in that the graft polymer B is obtainable by a grafting reaction of 15–35% by weight of I on to 65–85% by weight of II.

5. Mixtures according to Claims 1–4, characterised in that the graft polymer B is obtainable by a grafting reaction of 20–25% by weight of I on to 75–80% by weight of II.

6. Mixtures according to Claims 1–5, characterised in that the gel content of the graft base II is > 80% (measured in toluene).

7. Mixtures according to Claims 1–6, characterised in that the average particle diameter $d_{50}$ of the graft polymer B is 0.3–0.5 µm.

8. Mixtures according to Claims 1–7, characterised in that methyl methacrylate or a mixture of methyl methacrylate and acrylonitrile is used as the graft monomer BI.

9. Mixtures according to Claims 1–8, characterised in that they contain up to 60% by weight of reinforcing materials.

10. Use of the mixtures according to Claims 1–9 for the production of mouldings.

## Revendications

1. Mélange de

A. 65 à 99% en poids de polyalkylènetéréphtalate qui est constitué quant à lui

   a) de 0 à 100% en poids de polyéthylènetéréphtalate (PET) et

   b) de 100 à 0% en poids de polybutylènetéré-phtalate (PBT) et

B. 1 à 35% en poids de polymère greffé ayant un degré de greffage de 0,15 à 0,55 et un diamètre moyen des particules de 0,01 à 1 µm, les indications de pourcentages relatives à A et B se rapportant à la somme A + B et les indications de pourcentages relatives à a et b se rapportant à A, et le polymère greffé B peut être obtenu par réaction de greffage de

I. 10 à 40% en poids, par rapport à B, d'un ou plusieurs esters d'acide (méth)acrylique qui peuvent être remplacés jusqu'à moitié par de l'acrylonitrile, sur

II. 60 à 90% en poids, par rapport à B, d'un produit de polymérisation du butadiène avec au moins 70% en poids, par rapport à II, de restes butadiène comme substrat de greffage, caractérisé en ce que la proportion de gel du substrat de greffage II est supérieure à 70% (mesurée dans le toluène) et le diamètre moyen $d_{50}$ des particules du polymère greffé B va de 0,2 à 0,6 µm.

2. Mélanges suivant la revendication 1, caractérisés en ce qu'ils sont formés de 70 à 98% en poids de A et de 2 à 30% en poids de B.

3. Mélanges suivant les revendications 1 et 2, caractérisés en ce qu'ils sont formés de 75 à 97% en poids de A et de 3 à 25% en poids de B.

4. Mélanges suivant les revendications 1 à 3, caractérisés en ce que le polymère greffé B peut être obtenu par réaction de greffage de 15 à 35% en poids de I sur 65 à 85% en poids de II.

5. Mélanges suivant les revendications 1 à 4, caractérisés en ce que le polymère greffé B peut être obtenu par réaction de greffage de 20 à 25% en poids de I sur 75 à 80% en poids de II.

6. Mélanges suivant les revendications 1 à 5, caractérisés en ce que la teneur en gel du substrat de greffage II est supérieure à 80% (mesurée dans le toluène).

7. Mélanges suivant les revendications 1 à 6, caractérisés en ce que le diamètre moyen $d_{50}$ des particules du polymère greffé B va de 0,3 à 0,5 µm.

8. Mélanges suivant les revendications 1 à 7, caractérisés en ce qu'on utilise comme monomère à greffer BI le méthacrylate de méthyle ou un mélange de méthacrylate de méthyle et d'acrylonitrile.

9. Mélanges suivant les revendications 1 à 8, caractérisés en ce qu'ils contiennent jusqu'à 60% en poids d'agents de renforcement.

10. Utilisation des mélanges suivant les revendications 1 à 9 pour la production de pièces moulées.